# FASCICULE DE BREVET EUROPEEN

(11) **EP 2 822 130 B1**
(45) Date de publication et mention de la délivrance du brevet: **02.11.2016**
(21) Numéro de dépôt: 14172840.2
(22) Date de dépôt: 17.06.2014
(51) Int. Cl.: H02H 9/04, H02H 9/00, H02H 3/05, H02H 3/08

(54) **Dispositif de protection à l'encontre de surtensions électriques transitoires**
Schutzvorrichtung gegen vorübergehende Überlastspannungen
Device for protecting against transient electric surges

(30) Priorité: 03.07.2013 FR 1356477
(43) Date de publication de la demande: 07.01.2015
(73) Titulaire: ABB France, 91978 Courtaboeuf Cedex (FR)
(72) Inventeur: Lagnoux, Alain, 65140 Rabastens de Bigorre (FR); Duval, Michael, 65200 Bagnères de Bigorre (FR); Brescon, Stéphane, 65200 Bagnères de Bigorre (FR)
(74) Mandataire: Verriest, Philippe

(56) Documents cités:
- EP-A1- 0 716 493
- EP-A1- 2 278 605
- WO-A2-2005/039009
- US-A- 4 271 446
- US-A1- 2003 151 874

## Description

La présente invention concerne un dispositif de protection à l'encontre de surtensions électriques transitoires.

Le dispositif est le plus souvent connecté entre un conducteur à protéger et un autre conducteur à protéger ou la terre. Le courant traversant le dispositif est quasiment nul jusqu'à ce que la tension appliquée à ses bornes dépasse une valeur seuil ou tension de référence.

Au-delà de la valeur seuil, un courant traverse le dispositif dans le but de limiter la surtension appliquée au conducteur. Le courant est évacué vers la terre.

L'utilisation d'un dispositif comprenant deux composants passifs à limitation de tension branchés en parallèle entre les bornes du dispositif est connue du document EP 07 16 493.

Le dispositif ne nécessite qu'un seul composant opérationnel pour fonctionner. Un élément de visualisation fait état du nombre de composants opérationnels. Ainsi lorsqu'un des deux composants arrive en fin de vie et cesse de fonctionner, le dispositif est encore actif grâce au second composant.

Le dispositif comprenant un composant défectueux doit être remplacé mais est toujours actif dans l'intervalle de temps entre l'arrêt du fonctionnement du composant et le remplacement du dispositif.

Cette disposition réduit fortement le risque de panne du dispositif. Toutefois, selon l'état de la technique, les deux composants du dispositif sont sensiblement identiques.

Ainsi la sollicitation de chaque composant est sensiblement la même : le risque d'une panne simultanée des deux composants est à prendre en compte. En effet, si les deux composants sont défectueux, le dispositif n'est plus opérationnel et ne joue plus son rôle de protection contre les surtensions.

De plus, la détection de l'arrêt du fonctionnement d'un composant par un utilisateur et le remplacement du dispositif n'intervient pas forcément immédiatement après l'arrêt du fonctionnement du composant.

La présente invention vise à résoudre tout ou partie des inconvénients mentionnés ci-dessus.

Dans le présent texte, les verbes « raccorder », « connecter », « relier », « alimenter », « associer » et leurs dérivés se rapportent à une communication électrique entre deux composants distincts.

A cet effet, la présente invention concerne un dispositif de protection à l'encontre de surtensions électriques transitoires, comprenant deux composants passifs à limitation de tension, des déconnecteurs sensibles à l'état de ces composants et adaptés pour déconnecter individuellement chaque composant en fin de vie de celui-ci, les composants étant raccordés en parallèle entre une première et une seconde borne du dispositif.

Le dispositif est caractérisé en ce que la tension de référence du premier composant est inférieure à la tension de référence du second composant et en ce que le rapport des tensions de référence est inférieur à 2.

Selon un aspect de l'invention, le rapport des tensions de référence est supérieur à 1,2. Selon un autre aspect de l'invention, le rapport des tensions de référence est supérieur à 1,4. Selon un aspect de l'invention, le rapport des tensions de référence est inférieur à 1,6.

Selon les dispositions de l'invention, la tension de référence du premier composant est inférieure au seuil de déclenchement ou tension de référence du second composant. Le dispositif est caractérisé par une tension maximale de régime permanent inférieure ou égale à la tension de référence du premier composant.

Un rapport des tensions de référence de l'ordre de 1,5 permet à la fois de :
- préserver le second composant lorsque les deux composants sont connectés, et de
- disposer d'un second composant d'une valeur de tension de référence suffisamment basse pour que le dispositif joue un rôle de protection efficace à l'encontre des surtensions lorsque le premier composant est déconnecté.

Ainsi, lorsqu'une tension appliquée aux bornes du dispositif a une valeur comprise entre les valeurs des tensions de référence, une partie majoritaire du courant circule par la branche comprenant le premier composant alors qu'une partie minime du courant passe par la branche comprenant le second composant. Selon un exemple de mise en oeuvre, pour un rapport des tensions de référence de l'ordre de 1,5; la répartition entre la branche comprenant le premier composant et la branche comprenant le deuxième composant est de l'ordre de 90% et 10%.

Le deuxième composant est donc peu sollicité tant que le premier composant fonctionne. L'usure du second composant est limitée au moment de l'arrêt du fonctionnement du premier composant.

Toutefois le second composant reste actif et remplit son rôle de protection contre les surtensions électriques.

Ainsi l'utilisateur dispose d'un intervalle de temps conséquent pour remplacer le dispositif suite à l'arrêt du fonctionnement du premier composant.

Selon un aspect de l'invention, au moins un des composants à limitation de tension est une varistance.

En considérant la relation entre le courant traversant la varistance et la tension appliquée aux bornes de la varistance, le seuil de déclenchement délimite deux modes de fonctionnement.

Premièrement, lorsque la tension est inférieure au seuil de déclenchement ou tension maximale de régime permanent, le courant est quasiment nul : on parle de courant de fuite. Deuxièmement, lorsque la tension est supérieure au seuil de déclenchement, le courant est une fonction de la tension, la fonction étant croissante et sensiblement affine.

Selon un aspect de l'invention le premier composant est une varistance définie par une première caractéristique de l'intensité la parcourant en fonction de la tension entre ses bornes et le second composant une varistance définie par une seconde caractéristique de l'intensité la parcourant en fonction de la tension entre ses bornes.

En considérant la relation entre le courant traversant chaque varistance et la tension appliquée aux bornes des varistances, on distingue deux modes de fonctionnement. Premièrement, lorsque la tension est inférieure au seuil de déclenchement ou tension de référence de la première varistance, le courant est quasiment nul : on parle de courant de fuite. Deuxièmement, lorsque la tension est supérieure au seuil de déclenchement de la première varistance, le courant est une fonction de la tension, la fonction étant croissante et sensiblement affine pour la première varistance.

L'intensité parcourant le premier composant est également supérieure à l'intensité parcourant le second composant.

Selon un aspect de l'invention, des détecteurs de défauts des composants sont associés aux déconnecteurs.

Les déconnecteurs sont agencés pour interrompre le passage du courant dans l'un ou l'autre des composants lorsqu'un défaut est détecté par un détecteur de défauts.

Au-delà d'un certain nombre de sollicitations, les propriétés du composant se dégradent.

Selon un aspect de l'invention, les déconnecteurs sont des déconnecteurs thermiques.

Une manifestation des dégradations des propriétés d'un composant est l'élévation de sa température, qui peut être liée par exemple au passage d'un courant de fuite important pour une tension inférieure au seuil de déclenchement.

Selon un aspect de l'invention, les déconnecteurs sont associés à un élément de visualisation, l'élément de visualisation étant agencé pour indiquer l'interruption du passage du courant dans au moins une branche du dispositif, ladite au moins une branche comprenant un des composants passifs à limitation de tension.

Selon une première possibilité, l'interruption du passage du courant par les déconnecteurs est réversible. Cette disposition permet, par exemple, de déconnecter une branche comprenant un composant présentant un échauffement anormal suite à un nombre important de sollicitations.

De préférence, le réarmement ou reconnexion d'un composant peut être réalisée par une soudure, ladite soudure ayant été défaite par les déconnecteurs lors de l'interruption du passage du courant dans ledit composant.

Selon une deuxième possibilité, le déconnecteur d'un composant comprend un bilame agencé pour se déconnecter suite à une surchauffe et/ou surintensité prolongée.

Le bilame est également agencé pour se reconnecter automatiquement lors du retour du composant à une température normale.

Selon une troisième possibilité, l'interruption du passage du courant par un déconnecteur est irréversible.

L'interruption du passage du courant dans une des branches signifie l'arrêt du fonctionnement du composant compris dans cette branche.

Selon un aspect de l'invention, l'élément de visualisation est agencé pour indiquer une interruption du passage de courant dans les deux composants du dispositif.

L'arrêt du fonctionnement d'un des deux composants est une indication incitant le remplacement du dispositif par un dispositif de même type neuf. Toutefois le dispositif est encore fonctionnel.

Selon un aspect de l'invention, l'élément de visualisation est agencé pour indiquer une interruption du passage de courant dans les deux branches comprenant les composants passifs à limitation de tension.

De préférence, l'élément de visualisation comprend des indicateurs visuels.

Selon un aspect de l'invention, les déconnecteurs sont associés à des unités d'avertissement à distance agencées pour indiquer une interruption du passage de courant dans au moins une des deux branches comprenant les composants passifs à limitation de tension.

Les unités d'avertissement à distance sont agencées pour transmettre un message indiquant le nombre de composants opérationnels à un appareil récepteur distant selon un protocole de communication filaire et/ou sans fil.

Selon un aspect de l'invention, le dispositif comprend en outre un agencement de réglage du déséquilibre de courant entre une première branche comprenant le premier composant passif à limitation de tension et une seconde branche comprenant le second composant passif à limitation de tension, la première et la deuxième branche étant raccordées en parallèle entre les première et deuxième bornes du dispositif.

Selon un aspect de l'invention, l'agencement de réglage du déséquilibre comprend au moins un élément résistif agencé à une des branches du dispositif entre la première et la deuxième borne du dispositif.

Selon un aspect de l'invention, le dispositif comprend en outre un condensateur raccordé entre la première et la deuxième borne du dispositif.

Le condensateur est agencé pour limiter, au moment de la déconnexion d'un composant passif, le risque de formation d'un arc électrique au niveau des déconnecteurs dudit composant passif.

Selon un autre aspect de l'invention, le dispositif comprend en outre deux condensateurs, chaque condensateur étant raccordé à une branche en parallèle d'un déconnecteur.

De toute façon l'invention sera bien comprise à l'aide de la description qui suit en référence aux dessins schématiques annexés représentant, à titre d'exemple non limitatif, une forme d'exécution de ce dispositif.
Figure 1 est un schéma électrique du dispositif comprenant deux composants passifs à limitation de tension, selon un premier mode de réalisation.
Figure 2 est un schéma électrique du dispositif comprenant un composant à l'arrêt, selon le premier mode de réalisation.
Figure 3 est un schéma électrique comprenant deux composants à l'arrêt, selon le premier mode de réalisation.
Figure 4 est une représentation des caractéristiques de l'intensité en fonction de la tension de deux composants du dispositif, selon le premier mode de réalisation.
Figure 5 est un schéma électrique d'un dispositif comprenant des éléments passifs additionnels de type résistance, selon un second mode de réalisation.
Figure 6 est un schéma électrique d'un dispositif comprenant un condensateur selon un troisième mode de réalisation.
Figure 7 est un schéma électrique d'un dispositif comprenant un condensateur selon un quatrième mode de réalisation.

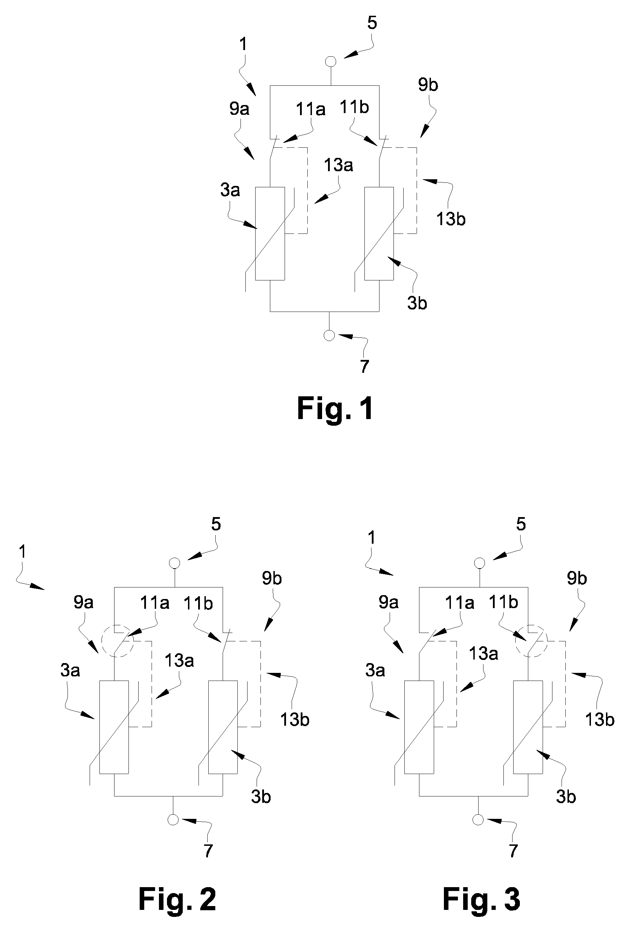

Comme illustré à la figure 1 et selon un premier mode de réalisation, un dispositif 1 de protection à l'encontre de surtensions électriques transitoires comprend deux composants passifs à limitation de tension.

Selon un premier mode de réalisation, les composants passifs sont des varistances 3a, 3b branchées en parallèle entre la première borne 5 et la deuxième borne 7 du dispositif 1.

Chaque branche 9a, 9b comprend une varistance 3a, 3b. Un déconnecteur du courant est raccordé en série sur chaque branche, chaque déconnecteur étant agencé pour ouvrir une branche 9a, 9b.

Des détecteurs de défauts sont associés aux déconnecteurs pour le pilotage de l'ouverture de la branche 9a, 9b correspondante.

Selon le premier mode de réalisation, les déconnecteurs sont des déconnecteurs thermiques 11a, 11 b. Les détecteurs de défauts comprennent chacun un contact 13a, 13b avec la varistance 3a, 3b. Les détecteurs de défauts sont agencés pour réagir à la température des varistances 3a, 3b.

Selon des variantes du premier mode de réalisation, les déconnecteurs peuvent également être des fusibles ou des dispositifs de déconnexion pourvus de bilames.

Le déconnecteur thermique 11 a, 11 b est en position fermée par défaut et s'ouvre lorsque la température de la varistance 3a, 3b dépasse une valeur limite. L'ouverture est définitive ou non selon la technologie choisie.

L'augmentation de la température de la varistance 3a, 3b est liée à la dégradation ses propriétés. Lorsqu'une valeur limite de température est atteinte, la varistance 3a, 3b n'est plus apte à fonctionner.

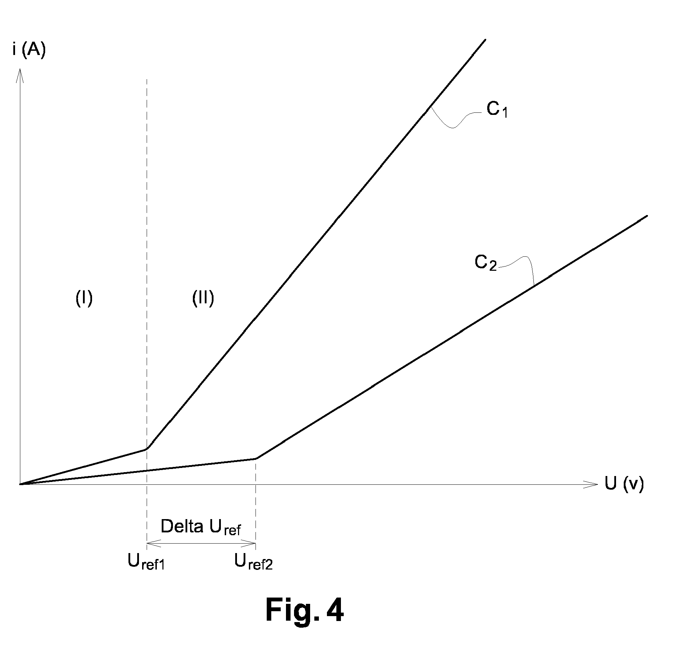

Comme illustré à la figure 4, la première 3a et la deuxième 3b varistance présentent des caractéristiques tension-intensité C1, respectivement C2 différentes.

La tension de référence Uref1 de la première varistance 3a est inférieure à la tension de référence Uref2 de la deuxième varistance 3b : le décalage de ces deux valeurs de tension de référence est de Delta Uref = Uref2 - Uref1.

Dans une première partie du graphique I, la tension U(V) est inférieure à la tension de référence Uref1 et les caractéristiques C1 et C2 présentent une intensité i(A) sensiblement nulle.

Dans une seconde partie du graphique II, la tension U(V) est supérieure à la tension de référence Uref1, la caractéristique C1 présente une intensité i(A) croissante selon une fonction sensiblement affine de la tension U(V). De même, la caractéristique C2 présente une intensité i(A) est croissante selon une fonction sensiblement affine de la tension U(V) à partir d'une valeur de tension U(V) égale à Uref2.

Dans la seconde partie du graphique II, les caractéristiques C1 et C2 présentent un décalage augmentant avec intensité, la caractéristique C2 présentant une tension supérieure à la caractéristique C1.

Comme illustré aux figures 1 à 3, le dispositif 1 présente plusieurs séquences de fonctionnement selon un ordre chronologique correspondant aux figures 1, 2 et 3.

La figure 1 présente un dispositif comprenant les deux varistances 3a, 3b aptes à fonctionner, puisque les déconnecteurs thermiques 11a, 11b sont fermés. L'élément de visualisation fait état de cette situation. Selon le premier mode de réalisation, l'élément de visualisation comprend deux indicateurs visuels de couleur verte.

Lorsque le dispositif 1 est soumis à une surtension dont la valeur est comprise entre Uref1 et Uref2, le courant traverse le dispositif essentiellement par la branche comprenant la première varistance 3a.

En effet, comme montré sur la figure 4, l'intensité de la caractéristique C2 est négligeable par rapport à l'intensité de la caractéristique C1 pour une tension comprise entre Uref1 et Uref2.

De même, Pour une tension supérieure à Uref2, l'intensité traversant la première varistance 3a est plus élevée que l'intensité traversant la seconde varistance 3b.

Ainsi, la sollicitation de la première varistance 3a est supérieure à la sollicitation de la deuxième varistance 3b. En moyenne la première varistance 3a est sollicitée à 90% et la seconde varistance 3b à 10%.

La figure 2 présente un dispositif 1 comprenant la première varistance 3a inapte à fonctionner puisque le déconnecteur thermique 11a est ouvert. La seconde varistance 3b est apte à fonctionner. L'élément de visualisation fait état de cette situation. Selon le premier mode de réalisation, l'élément de visualisation sont deux indicateurs visuels, le premier se rapportant à l'état de la première varistance 3a étant rouge, la seconde se rapportant à l'état de la seconde 3b étant vert.

Selon le premier mode de réalisation, le dispositif est également pourvu d'unités d'avertissement à distance du nombre de composants opérationnels.

Les unités d'avertissement à distance sont agencées pour transmettre un message indiquant le nombre de composants opérationnels à un appareil récepteur distant selon un protocole de communication filaire et/ou sans fil.

La figure 2 présente la deuxième séquence de fonctionnement, succédant à la première présentée figure 1. La première varistance 3a est déconnectée du circuit et seule la seconde varistance 3b est apte à être traversée par un courant en cas de surtension supérieure à Uref2.

L'indicateur visuel de couleur rouge et verte signale à l'utilisateur que le dispositif 1 doit être remplacé par un nouveau dispositif similaire comprenant deux varistances aptes à être traversées par un courant. Dans ce cas le nouveau dispositif présente un fonctionnement selon la première séquence, comme illustré figure 1.

Si le dispositif 1 n'est pas remplacé, un défaut de la seconde varistance 3b est susceptible d'apparaitre.

La figure 3 présente une troisième séquence de fonctionnement succédant à la seconde séquence de fonctionnement présentée figure 2. Le dispositif 1 comprend les deux varistances 3a, 3b inaptes à fonctionner. Dans ce cas les deux indicateurs visuels sont de couleur rouge, signalant le défaut des deux varistances 3b, 3b et le non fonctionnement du dispositif.

La seconde varistance 3b a été peu sollicitée durant la première séquence de fonctionnement du fait de son surdimensionnement par rapport à la première varistance 3a. L'apparition d'un défaut de la seconde varistance 3b laisse une période suffisamment longue à l'utilisateur pour changer de dispositif 1 avant que le dispositif 1 passe de la deuxième à la troisième séquence.

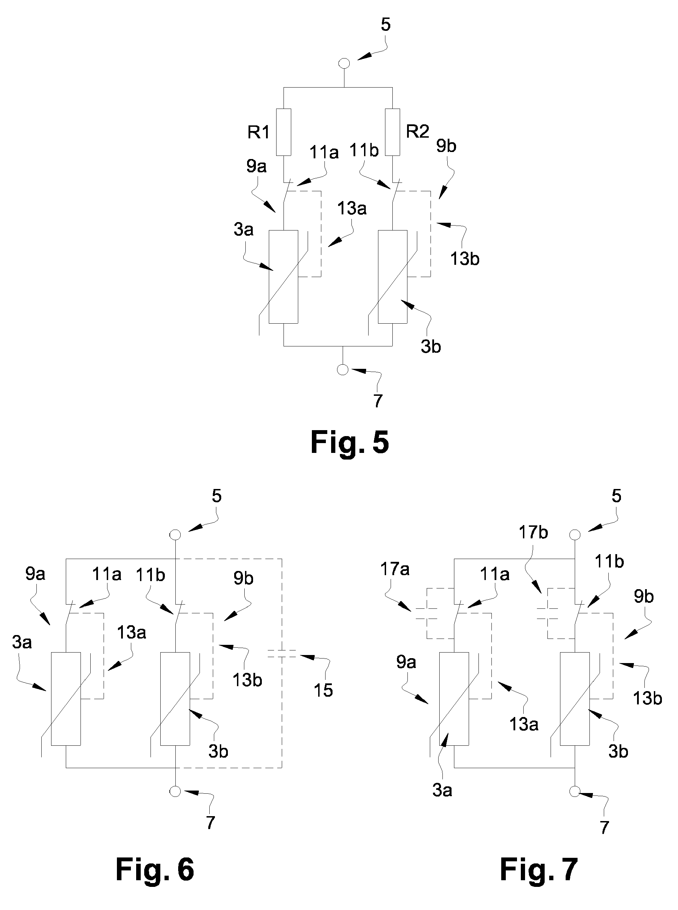

La figure 5 illustre un deuxième mode de réalisation, dans lequel une résistance R1 est rapportée sur la première branche 9a du circuit et une deuxième résistance R2 est rapportée sur la deuxième branche 9b du circuit.

Les valeurs des résistances R1 et R2 sont déterminées pour permettre un ajustement précis du déséquilibre des branches. L'ajustement consistant à obtenir, pour chaque branche une caractéristique de l'intensité la traversant en fonction de la tension appliquée entre la première 5 et la deuxième borne 7. Ainsi, l'ajout des résistances R1 et R2 au dispositif permet un ajustement des courbes C1 et C2 présentées à la figure 4, les nouvelles courbes obtenues (non représentées) caractérisant chacune une branche 9a, 9b.

La figure 6 illustre un troisième mode de réalisation, dans lequel un condensateur 15 est branché en parallèle des première 9a et deuxième 9b branches entre la première 5 et la deuxième borne 7.

L'ajout du condensateur 15 au circuit a pour effet de limiter la formation d'un arc électrique au niveau d'un déconnecteur thermique 11a, 11 b au moment de sa déconnexion.

La figure 7 illustre un quatrième mode de réalisation, dans lequel chaque branche 9a, 9b comprend un condensateur 17a, 17b raccordé en parallèle du déconnecteur thermique 11 a, 11 b de ladite branche 9a, 9b.

Tout comme pour le troisième mode de réalisation, la présence des condensateurs 17a, 17b a pour rôle de limiter la formation d'un arc électrique au niveau d'un déconnecteur thermique 11 a, 11 b au moment de sa déconnexion.

## Revendications

1. Dispositif (1) de protection à l'encontre de surtensions électriques transitoires, comprenant deux composants passifs à limitation de tension (3a, 3b), des déconnecteurs (11 a, 11b) sensibles à l'état de ces composants (3a, 3b) et adaptés pour déconnecter individuellement chaque composant (3a, 3b) en fin de vie de celui-ci lorsqu'il cesse de fonctionner, les composants étant raccordés en parallèle entre une première et une seconde borne du dispositif,
**caractérisé en ce que** la tension de référence (Uref1) du premier composant (3a) est inférieure à la tension de référence (Uref2) du second composant (3b) et **en ce que** le rapport de la tension de référence du second composant sur la tension de référence du premier composant (Uref2/Uref1) est inférieur à 2.

2. Dispositif selon la revendication 1, dans lequel ledit rapport des tensions de référence (Uref2/Uref1) est supérieur à 1,2.

3. Dispositif selon la revendication 2, dans lequel ledit rapport des tensions de référence (Uref2/Uref1) est supérieur à 1,4.

4. Dispositif (1) selon l'une des revendications précédentes, dans lequel au moins un des composants à limitation de tension est une varistance (3a).

5. Dispositif (1) selon l'une des revendications précédentes, dans lequel les déconnecteurs sont associés à un élément de visualisation, l'élément de visualisation étant agencé pour indiquer l'interruption du passage du courant dans au moins une branche (9a, 9b) du dispositif (1), ladite au moins une branche (9a, 9b) comprenant un des composants passifs à limitation de tension.

6. Dispositif (1) selon la revendication 5, dans lequel l'élément de visualisation est agencé pour indiquer une interruption du passage de courant dans les deux branches (9a, 9b) comprenant les composants passifs à limitation de tension.

7. Dispositif (1) selon l'une des revendications précédentes, dans lequel les déconnecteurs sont associés à des unités d'avertissement à distance agencées pour indiquer une interruption du passage de courant dans au moins une des deux branches (9a, 9b) comprenant les composants passifs à limitation de tension.

8. Dispositif (1) selon l'une des revendications précédentes comprenant en outre un agencement de réglage du déséquilibre de courant entre une première branche (9a) comprenant le premier composant passif à limitation de tension et une seconde branche (9b) comprenant le second composant passif à limitation de tension, la première et la deuxième branche étant raccordées en parallèle entre les première (5) et deuxième (7) bornes du dispositif (1).

9. Dispositif (1) selon la revendication 8, dans lequel l'agencement de réglage du déséquilibre comprend au moins un élément résistif agencé dans l'une des branches (9a, 9b) du dispositif (1) entre la première (5) et la deuxième (7) borne du dispositif (1).

10. Dispositif (1) selon l'une des revendications précédentes comprenant en outre un condensateur raccordé entre la première (5) et la deuxième (7) borne du dispositif.

## Patentansprüche

1. Vorrichtung (1) zum Schutz vor vorübergehenden elektrischen Überspannungen, die zwei passive Bauteile mit Spannungsbegrenzung (3a, 3b), Trenner (11 a, 11 b), die auf den Zustand dieser Bauteile (3a, 3b) reagieren und angepasst sind, um jedes Bauteil (3a, 3b) einzeln an seinem Lebensende zu trennen, wenn es aufhört zu funktionieren, umfasst, wobei die Bauteile parallel zwischen einer ersten und einer zweiten Klemme der Vorrichtung angeschlossen sind,
**dadurch gekennzeichnet, dass** die Referenzspannung (Uref1) des ersten Bauteils (3a) niedriger ist als die Referenzspannung (Uref2) des zweiten Bauteils (3b), und dass das Verhältnis der Referenzspannung des zweiten Bauteils zu der Referenzspannung des ersten Bauteils (Uref2/Uref1) kleiner ist als 2.

2. Vorrichtung nach Anspruch 1, wobei das Verhältnis der Referenzspannungen (Uref2/Uref1) größer ist als 1,2.

3. Vorrichtung nach Anspruch 2, wobei das Verhältnis der Referenzspannungen (Uref2/Uref1) größer ist als 1,4.

4. Vorrichtung (1) nach einem der vorhergehenden Ansprüche, wobei mindestens eines der Bauteile mit Spannungsbegrenzung ein Varistor (3a) ist.

5. Vorrichtung (1) nach einem der vorhergehenden Ansprüche, wobei die Trenner mit einem Anzeigeelement assoziiert sind, wobei das Anzeigeelement eingerichtet ist, um die Unterbrechung der Passage des Stroms in dem mindestens einen Schenkel (9a, 9b) der Vorrichtung (1) anzuzeigen, wobei der mindestens eine Schenkel (9a, 9b) eines der passiven Bauteile mit Spannungsbegrenzung umfasst.

6. Vorrichtung (1) nach Anspruch 5, wobei das Anzeigeelement eingerichtet ist, um eine Unterbrechung der Passage des Stroms in den zwei Schenkeln (9a, 9b), die passive Bauteile mit Spannungsbegrenzung umfassen, anzuzeigen.

7. Vorrichtung (1) nach einem der vorhergehenden Ansprüche, wobei die Trenner mit Fernwarnungseinheiten verbunden sind, um eine Unterbrechung der Strompassage in mindestens einem der zwei Schenkel (9a, 9b), die passive Bauteile mit Spannungsbegrenzung umfassen, anzuzeigen.

8. Vorrichtung (1) nach einem der vorhergehenden Ansprüche, die außerdem eine Einstelleinrichtung der Stromunausgewogenheit zwischen einem ersten Schenkel (9a), der das erste passive Bauteil mit Spannungsbegrenzung umfasst, und einem zweiten Schenkel (9b), der das zweite passive Bauteil mit Spannungsbegrenzung umfasst, umfasst, wobei der erste und der zweite Schenkel zwischen der ersten (5) und zweiten (7) Klemme der Vorrichtung (1) parallel geschaltet sind.

9. Vorrichtung (1) nach Anspruch 8, wobei die Einstelleinrichtung der Stromunausgewogenheit mindestens ein resistives Element umfasst, das in einem der Schenkel (9a, 9b) der Vorrichtung (1) zwischen der ersten (5) und zweiten (7) Klemme der Vorrichtung (1) eingerichtet ist.

10. Vorrichtung (1) nach einem der vorhergehenden Ansprüche, die außerdem einen Kondensator umfasst, der zwischen der ersten (5) und der zweiten (7) Klemme der Vorrichtung eingerichtet ist.

## Claims

1. A device (1) for protecting against transient electrical overvoltages, comprising two passive voltage limiting components (3a, 3b), disconnectors (11 a, 11 b) responsive to the state of these components (3a, 3b) and adapted to individually disconnect each component (3a, 3b) at the end of life of the latter, the components being connected in parallel between a first and a second terminal of the device,
**characterized in that** the reference voltage (Uref1) of the first component (3a) is lower than the reference voltage (Uref2) of the second component (3b) and **in that** the ratio of the reference voltage of the second component relative to the reference voltage of the first component (Uref2/Uref1) is lower than 2.

2. The device according to claim 1, wherein said ratio of the reference voltages (Uref2/Uref1) is greater than 1.2.

3. The device according to claim 2, wherein the ratio of the reference voltages (Uref2/Uref1) is greater than 1.4.

4. The device (1) according to any of the preceding claims, wherein at least one of the voltage limiting components is a varistor (3a).

5. The device (1) according to any of the preceding claims, wherein the disconnectors are associated with a display member, the display member being arranged to indicate the interruption of the passage of the current in at least one branch (9a, 9b) of the device (1), said at least one branch (9a, 9b) comprising one of the passive voltage limiting components.

6. The device (1) according to claim 5, wherein the display member is arranged to indicate an interruption of the passage of current in the two branches (9a, 9b) comprising the passive voltage limiting components.

7. The device (1) according to any of the preceding claims, wherein the disconnectors are associated with remote warning units arranged to indicate an interruption of the passage of current in at least one of the two branches (9a, 9b) comprising the passive voltage limiting components.

8. The device (1) according to any of the preceding claims further comprising an arrangement for adjusting the current unbalance between a first branch (9a) comprising the first passive voltage limiting component and a second branch (9b) comprising the second passive voltage limiting component, the first and the second branches being connected in parallel between the first (5) and the second (7) terminals of the device (1).

9. The device (1) according to claim 8, wherein the arrangement for adjusting the imbalance comprises at least one resistive member arranged in one of the branches (9a, 9b) of the device (1) between the first (5) and the second (7) terminals of the device (1).

10. The device (1) according to any of the preceding claims further comprising a capacitor connected between the first (5) and the second (7) terminals of the device.
